# EUROPÄISCHE PATENTSCHRIFT

(11) **EP 1 528 354 B1**
(45) Veröffentlichungstag und Bekanntmachung des Hinweises auf die Patenterteilung: **29.04.2009**
(21) Anmeldenummer: 04005395.1
(22) Anmeldetag: 06.03.2004
(51) Int. Cl.: G01B 11/03

(54) **Verfahren und Vorrichtung zum Messen eines Objektes mittels eines Koordinatenmessgerätes**
Method and apparatus for measuring of an object by using a coordinate measuring machine
Procédé et dispositif pour la mesure d'un objet à l'aide d'une machine de mesure de coordonnées

(30) Priorität: 29.10.2003 DE 10350808
(43) Veröffentlichungstag der Anmeldung: 04.05.2005
(73) Patentinhaber: Werth Messtechnik GmbH, 35394 Giessen (DE)
(72) Erfinder:
(74) Vertreter: Stoffregen, Hans-Herbert

(56) Entgegenhaltungen:
- EP-A- 0 965 816
- WO-A-02/25206
- WO-A-03/008905
- DE-A1- 19 805 892
- US-B1- 6 441 910

## Beschreibung

Die Erfindung bezieht sich auf ein Koordinatenmessgerät zum Messen eines Objektes bzw. dessen Oberfläche, umfassend ein taktil ermittelndes, mit dem Objekt wechselwirkendes Antastformelement sowie eine die Lage des Antastformelementes oder einer diesem unmittelbar zugeordneten Zielmarke erfassende optische Sensorik, die einen Abstandssensor und einen Bildverarbeitungssensor umfasst, wobei der Abstandssensor und der Bildverarbeitungssensor einen gemeinsamen optischen Strahlengang aufweisen. Ferner nimmt die Erfindung Bezug auf ein Verfahren zur Bestimmung der räumlichen Lage eines ein Objekt bzw. dessen Oberfläche taktil messenden Antastformelements unter Verwendung einer einen Abstandssensor und einen Bildverarbeitungssensor mit gemeinsamen optischen Strahlengang aufweisenden optischen Sensorik eines Koordinatenmessgerätes.

Bei einem Einsatz von Multisensorkoordinatenmessgeräten ist es sinnvoll, die vorhandenen optischen Sensoren für das Messen von Antastformelementen, die unmittelbar mit dem zu messenden Objekt wechselwirken, zu nutzen. Ein entsprechendes Antastformelement ist z. B. aus der DE 198 05 892 A1 bekannt, wobei durch Auswertung eines Bildverarbeitungssensors auf die Lage des Antastformelementes geschlossen wird. Dabei kann entweder eine zweidimensionale Auswertung erfolgen oder durch stereoskopische Auswertung auf die dreidimensionale Lage des Antastformelementes geschlossen werden.

Aus der US 5,825,666 ist ein Koordinatenmessgerät mit einem starren Taster bekannt, der zwei Zielmarken aufweist, um über diese Rückschlüsse auf die räumliche Lage des Antastformelementes ziehen zu können.

Die WO 02/06765 A1 bezieht sich auf ein Verfahren zum Messen von Gegenständen, wobei mittels eines Laserabstandssensors Z-Position des Antastformelementes eines taktil-optischen Tasters gemessen wird. Ferner kann ein Bildverarbeitungssensor vorgesehen sein.

Der WO-A-02/25206 sind eine Anordnung und ein Verfahren zum opto-taktilen Messen von Strukturen eines Objektes mittels eines Koordinatenmessgerätes zu entnehmen. Ein erster optischer Sensor und ein mechanischer Taster mit Antastformelement sind zu einer Einheit integriert. Um das Antastformelement dreidimensional zu messen, wird ein zweiter optischer Sensor gleicher Bauart benutzt, dessen optische Achse senkrecht zu der des ersten optischen Sensors verläuft.

Eine gattungsgemäße Vorrichtung ist aus der WO-A-03/008905 bekannt. Mit dem Abstandssensor werden wahlweise die Position eines Antastformelementes oder die Oberflächeneigenschaften eines Objektes gemessen. Alternativ kann die Position des Antastformelementes mittels eines Bildverarbeitungssensors gemessen werden, wobei der Abstandssensor sodann zur Beleuchtung des Antastformelementes dient.

Nach der US-B-6,441,910 weist ein Koordinatenmessgerät einen mechanischen Taster und einen optischen Sensor auf, um ein Objekt opto-taktil messen zu können. Mechanischer Taster und optischer Sensor sind als Einheit verstellbar.

Zum Messen eines Objektes mittels eines Koordinatenmessgerätes wird nach der DE-A-198 05 892 die Position eines Tasters mittels einer optischen Erfassungseinrichtung gemessen, die unabhängig vom Taster verstellbar ist.

Nach der EP-A-0 965 816 werden geometrische Strukturen eines Objektes mit einer optischen Erfassungseinrichtung und einem Taster gemessen, die unabhängig voneinander beweglich sind.

Zuvor bekannte Verfahren bzw. Koordinatenmessgeräte beziehen sich folglich dem Grunde nach allein auf Teillösung der Gesamtproblematik, um eine exakte Raumlagebestimmung des Antastformelementes sicherzustellen.

Der vorliegenden Erfindung liegt daher das Problem zugrunde, ein Verfahren und eine Vorrichtung der eingangs genannten Art so weiterzubilden, dass die Möglichkeit besteht, eine dreidimensionale Lagebestimmung des Antastformelementes bei Minimierung von Messfehlern zu ermöglichen.

Die Erfindung wird durch die unabhängigen Ansprüche definiert.

Erfindungsgemäß wird das Problem im Wesentlichen durch ein Verfahren der eingangs genannten Art dadurch gelöst, dass die Lage des Anstastformelementes oder einer diesem zugeordneten Zielmarke mittels des Abstandssensors und mittels des Bildverarbeitungssensors gemessen wird, dass die Messergebnisse des Abstandssensors und des Bildverarbeitungssensors einem Auswerterechner zugeführt werden, der aus den Messergebnissen der Lage des Antastformelementes bzw. der Zielmarke die räumliche Lage des Antastformelementes berechnet und dass mit dem Abstandssensor oder dem Bildverarbeitungssensor auch unmittelbar die Oberfläche des Objektes gemessen wird. Dabei kann es sich bei dem Abstandssensor z. B. um einen Laserabstandssensor, Weißlichtinterferometer, Autofokussenser, Kohärenzradar oder einen Sensor handeln, der sich zur Abstandsbestimmung achromatische Abbildungsfehler zu eigen macht.

Erfindungsgemäß werden ein Abstandssensor und ein Bildverarbeitungssensor in einem Koordinatenmessgerät integriert, das einen taktil ermittelnden Taster umfasst, um zum einen mittels des Abstandssensors und des Bildverarbeitungssensors die räumliche Lage des Antastformelementes des taktil-optischen Tasters oder einer dem Antastformelement zugeordneten Zielmarke zu messen, wobei Abstandssensor und Bildverarbeitungssensor einen gemeinsamen optischen Strahlengang aufweisen und geeignet sind, das Objekt bzw. dessen Oberfläche zu messen.

Eine Vorrichtung der eingangs genannten Art zeichnet sich dadurch aus, dass der Abstandssensor und der Bildverarbeitungssensor eingerichtet sind zur gleichzeitigen Messung der Lage des Antastformelementes oder der Zielmarke, dass das Koordinatenmessgerät einen Auswerterechner umfasst und dass der Auswerterechner dazu eingerichtet ist, aus den Messwerten des Abstandssensors und des Bildverarbeitungsssnsors die räumliche Lage des Antastformelementes zu berechnen, wobei der Abstandssensor und/oder der Bildverarbeitungssensor derart eingerichtet ist, auch unmittelbar die Oberfläche des Objektes zu messen. Bei dem Abstandssensor kann es sich z. B. um einen Laserabstandssensor, Weißlichtinterferometer, Autofokussensor, Kohärenzradar oder einen Sensor handeln, der sich zur Abstandsbestimmung achromatische Abbildungsfehler zu eigen macht.

Durch diese Maßnahmen besteht die Möglichkeit, eine exakte Raumbestimmung des Antastformelementes sicherzustellen, wobei Messfehler minimierbar sind.

Insbesondere ist vorgesehen, dass die Zielmarke so ausgebildet ist, dass deren Auslenkung parallel zum Strahlengang mittels Abstandssensor messbar ist, gleichzeitig jedoch Strukturen aufweist, die ein Messen der Lage in der Ebene senkrecht zum Strahlengang mittels Bildverarbeitung ermöglicht. Dabei sollte die Zielmarke so ausgeprägt sein, dass bei einer rein lateralen Auslenkung oder nahezu rein lateralen Auslenkung des die Zielmarke und das Antastformelement umfassenden Tasters - Taststiftkonfiguration genannt - der Messwert für den Abstandssensor konstant bleibt.

Eine bevorzugte Ausgestaltung der Zielmarke ist daran zu sehen, dass die Zielmarke auf einer Kugeloberfläche angeordnet ist, deren Radius gleich Abstand zwischen Zielmarke und Lagerung des Tasters bzw. der Taststiftkonfiguration ist.

Alternativ kann eine Zielmarke verwendet werden, die von einer kugelförmigen Geometrie abweicht, wobei durch vorherige messtechnische Erfassung ihrer Geometrie diese in eine kugelförmige umrechenbar ist.

In Weiterbildung der Erfindung ist vorgesehen, dass für das Messen mittels Bildverarbeitungssensor in lateraler Richtung eine Markierung auf der Kugeloberfläche angebracht ist, die in senkrechter Richtung, also in Richtung des Strahlenganges eine Ausdehnung nicht aufweist.

Abstandssensor und Bildverarbeitungssensor können gleichzeitig messen, wobei die Messwerte gemeinsam in einem Auswerterechner zusammenführbar sind.

Die für die Bildverarbeitung aufgetragene Zielmarke kann Vorzugsrichtungen wie Kreuz oder Ellipse aufweisen, um eine Verdrehung der Taststiftkonfiguration bzw. des Taststiftes zu erfassen und auszuwerten.

Als Abstandssensor kann ein in den Strahlengang integrierter Foucaultlasersensor zum Einsatz gelangen. Auch ein Abstandssensor in Form eines Mehrchip-Autofocus kommt in Frage.

In hervorzuhebender Weiterbildung der Erfindung ist vorgesehen, dass die Messwerte des Abstandssensors und des Bildverarbeitungssensors in Echtzeit zur Regelung von Scanvorgängen mit dem Taster und dem Koordinatenmessgerät herangezogen werden.

Das Überschreiten von definierten Sollauslenkungen beider Sensoren, also des Abstandssensors und des Bildverarbeitungssensors kann des Weiteren als Triggersignal zum Bestimmen der Tasterposition genutzt werden.

Die Auslenkung der Koordinatenrichtung von beiden Sensoren mit den Koordinatenwerten des Koordinatenmessgerätes kann zu einem Messwert zusammengefasst oder überlagert werden.

Zwischen der Zielmarke und dem Antastformelement kann ein ein-, zwei- oder dreidimensionales Lager vorgesehen sein. Dabei können die Zielmarke und das Antastformelement durch einen starren Taststift verbunden sein. Alternativ kann auch ein elastischer Taststift verwendet werden.

Unabhängig hiervon ist bevorzugter Weise als Lagerstelle für den Taststift eine elastische Membran zu wählen.

Der Taststift mit Zielmarke und Antastformelement kann durch ein Fehlerparallelogramm in ein, zwei oder drei Achsen gelagert werden.

Das Tastsystem bzw. der Taster bestehend aus Antastformelement, Taststift und Zielmarke kann gekapselt aufgebaut sein, wobei ein optisches Eintrittsfenster für das Erfassen der Zielmarke vorgesehen ist. Dabei kann das optische Eintrittsfenster als abbildendes System ausgebildet sein.

Die Zielmarke kann durch Dunkelfeldauflicht oder Hellfeldauflicht oder winkelverstellbares Auflicht beleuchtet werden. Die Zielmarke kann des Weiteren durch den Laserstrahl des Laserabstandssensors beleuchtet werden.

Nach einem weiteren Vorschlag kann die Zielmarke aus abgestuften Grauwerten bestehen, wodurch die laterale Auslenkung der Zielmarke zu einer Intensitätsveränderung des Laserreflexsignals führt. Dabei kann die laterale Auslenkung aus der Intensitätsveränderung des Laserreflexsignals detektiert werden.

Das Tastsystem bestehend aus Zielmarke und Lagerung und/oder Antastformelement und/oder Kapselung kann über ein Tasterwechselsystem vor die optische Sensorik eingewechselt werden und in einem Tastermagazin abgelegt werden.

Die Kennlinie für das Verhalten von Auslenkung des Antastformelementes zur Auslenkung der optischen Sensoren kann vor Betrieb des Koordinatenmessgerätes eingemessen und anschließend in Echtzeit automatisch korrigiert werden.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der folgenden Beschreibung von der Zeichnung zu entnehmenden bevorzugten Ausführungsbeispielen.

Es zeigen:
- Fig. 1:: eine Prinzipdarstellung eines Koordinatenmessgerätes und
- Fig. 2:: Details zur räumlichen Messung der Position eines Antastformelementes.

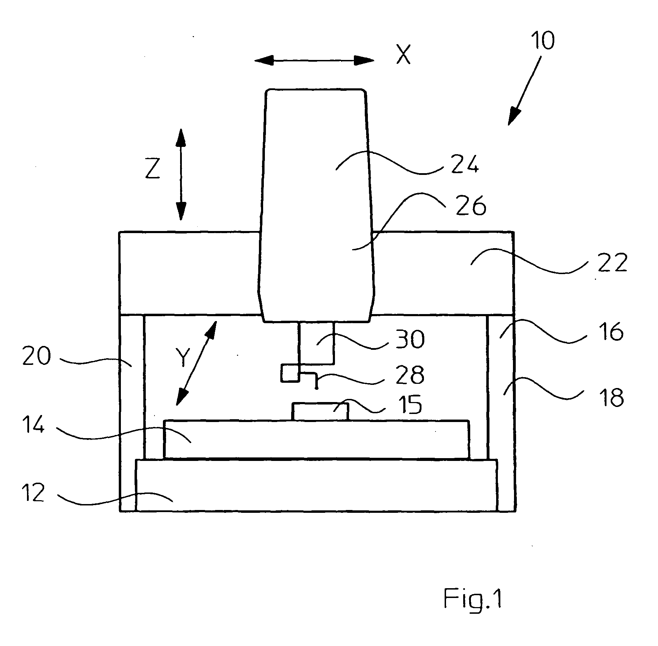

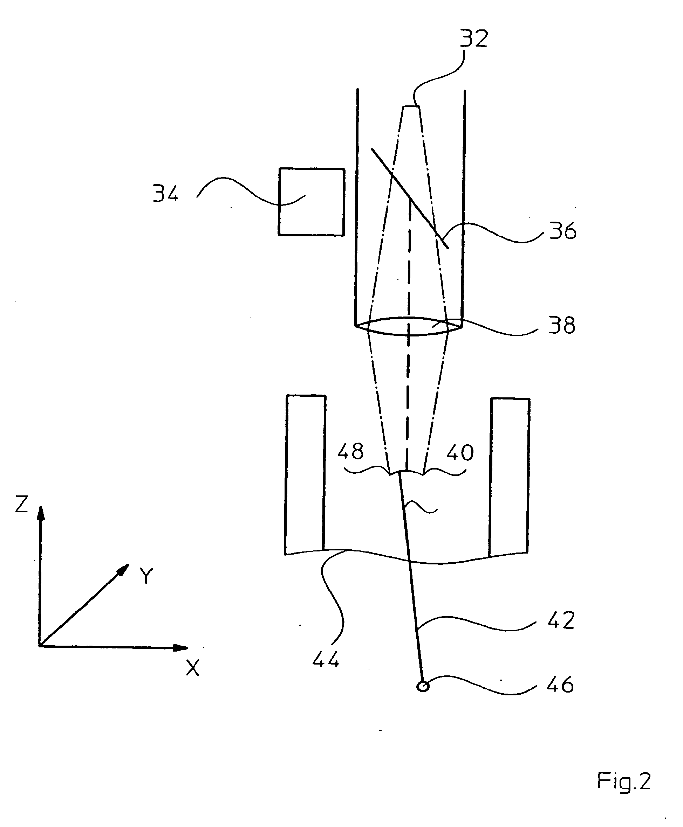

In Fig. 1 ist rein prinzipiell ein Koordinatenmessgerät 10 dargestellt. Dieses weist einen insbesondere aus Granit bestehenden Grundrahmen 12 mit Messtisch 14 auf, auf dem ein zu messendes Objekt 15 angeordnet ist. Entlang dem Grundrahmen 12 ist ein Portal 16 in Y-Richtung verstellbar. Hierzu sind Säulen oder Ständer 18, 20 gleitend an dem Grundrahmen 12 abgestützt. Von den Säulen 18, 20 geht eine Traverse 22 aus, entlang der, also gemäß der Fig. 1 in X-Richtung ein Schlitten 24 verstellbar ist, der seinerseits eine Säule oder Pinole 26 aufnimmt, die in Z-Richtung verstellbar ist. Von der Pinole oder Säule geht ein Taster 28 aus. Des Weiteren ist in der Pinole 26 eine optische Sensorik 30 integriert, die prinzipiell anhand der Fig. 2 erläutert wird.

In Fig. 2 ist die in Fig. 1 mit dem Bezugszeichen 30 versehene optische Sensorik detaillierter dargestellt. So umfasst die Sensorik 30 einen Bildverarbeitungssensor 32 sowie einen Abstandssensor 34, die über einen Strahlungsteiler bzw. Spiegel 36 in ein gemeinsames optisches System eingespiegelt werden. Hierdurch wird erreicht, dass die Messebenen der Sensoren 32, 34 auf einer Zielmarke 40 (Target) erzeugt werden. Die Zielmarke 40 geht von einem Taster bzw. Taststift 42 aus, der über eine Membran 44 gelagert ist. Gegenüberliegend zur Zielmarke 40 geht von dem Taststift 42 ein Antastformelement 46 aus, mit dem taktil Messpunkte an dem Objekt 16 bzw. dessen Oberfläche ermittelt werden. Bei dem Abstandssensor 34 kann es sich z. B. um einen Laserabstandssensor, Weißlichtinterferometer, Autofokussensor, Kohärenzradar oder einen Sensor handeln, der sich zur Abstandsbestimmung achromatische Abbildungsfehler zu eigen macht.

Auf der Zielmarke 40 ist des Weiteren eine Markierung 48 für den Bildverarbeitungssensor 32 bzw. das Bildverarbeitungssystem aufgebracht.

Die Zielmarke 40 erstreckt sich in bevorzugter Weise auf einem Kugeloberflächenabschnitt mit einem Radius, der dem Abstand 47 zwischen Zielmarke 40 und Lagerpunkt, also der Befestigung in der Membran 44, entspricht.

Die Auslenkung des Antastformelementes 46 wird durch Messen der Position der Zielmarke 40 bzw. deren Markierung und in Kombination dieses Messwertes mit dem Abstandsmesswert des Laserabstandssensors 34 auf die Zielmarke 40 kombiniert. Durch Verknüpfung der geometrischen Verhältnisse wird die Lage des Antastformelementes 46 in einem Rechner errechnet.

## Patentansprüche

1. Koordinatenmessgerät (10) zum Messen eines Objektes (15) bzw. dessen Oberfläche, umfassend ein taktil ermittelndes, mit dem Objekt wechselwirkendes Antastformelement (46) sowie eine die Lage des Antastformelementes oder einer diesem unmittelbar zugeordneten Zielmarke (40) erfassende optische Sensorik (30), die einen Abstandssensor (34) und einen Bildverarbeitungssensor (32) umfasst, wobei der Abstandssensor und der Bildverarbeitungssensor einen gemeinsamen optischen Strahlengang aufweisen,
**dadurch gekennzeichnet,**
**dass** der Abstandssensor (34) und der Bildverarbeitungssensor (32) eingerichtet sind zur gleichzeitigen Messung der Lage des Antastformelementes (46) oder der Zielmarke (40), dass das Koordinatenmessgerät einen Auswerterechner umfasst und dass der Auswerterechner dazu eingerichtet ist, aus den Messwerten des Abstandssensors und des Bildverarbeitungssensors die räumliche Lage des Antastformelementes zu berechnen, wobei der Abstandssensor und/oder der Bildverarbeitungssensor derart eingerichtet ist, auch unmittelbar die Oberfläche des Objektes zu messen.

2. Koordinatenmessgerät nach Anspruch 1,
**dadurch gekennzeichnet,**
**dass** die Zielmarke (40) derart ausgebildet ist, dass diese zum Messen ihrer Auslenkung parallel zum Strahlengang mittels des Abstandssensors (34) geeignet ist und Strukturen aufweist, die ein Messen der Lage in senkrecht zum Strahlengang verlaufender Ebene mittels Bildverarbeitung gestattet.

3. Koordinatenmessgerät nach zumindest einem der vorherigen Ansprüche,
**dadurch gekennzeichnet,**
**dass** die Zielmarke (40) oder eine Markierung (48) dieser so ausgeprägt ist, dass bei einer rein lateralen Auslenkung einer die Zielmarke und das Antastformelement (46) umfassenden Taststiftkonfiguration der Messwert für den Abstandssensor (34) konstant bleibt.

4. Koordinatenmessgerät nach zumindest einem der vorherigen Ansprüche,
**dadurch gekennzeichnet,**
**dass** die Zielmarke (40) bzw. eine Markierung (48) dieser auf einer Kugeloberfläche angeordnet ist, deren Radius gleich dem Abstand zwischen Zielmarke bzw. deren Markierung und der Lagerung einer die Zielmarke und das Antastformelement (46) umfassenden Taststiftkonfiguration ist.

5. Koordinatenmessgerät nach zumindest einem der vorherigen Ansprüche,
**dadurch gekennzeichnet,**
**dass** die Zielmarke (40) bzw. deren Markierung (48) eine unkugelförmige Geometrie aufweist, wobei durch vorherige messtechnische Erfassung die Geometrie in eine kugelförmige umrechenbar ist.

6. Koordinatenmessgerät nach zumindest einem der vorherigen Ansprüche,
**dadurch gekennzeichnet,**
**dass** für das Messen mit Bildverarbeitung in lateraler Richtung eine Zielmarke (40) bzw. Markierung (48) dieser auf einer Kugeloberfläche angeordnet ist und in radialer Richtung eine Ausdehnung nicht aufweist.

7. Koordinatenmessgerät nach zumindest einem der vorherigen Ansprüche,
**dadurch gekennzeichnet,**
**dass** die für den Bildverarbeitungssensor (32) aufgetragene Zielmarke (40) bzw. deren Markierung (48) Vorzugsrichtungen wie ein Kreuz oder eine Ellipse zur Auswertung einer Verdrehung der Taststiftkonfiguration aufweist.

8. Koordinatenmessgerät nach zumindest einem der vorherigen Ansprüche,
**dadurch gekennzeichnet,**
**dass** als Abstandssensor (34) ein in den Strahlengang integrierter Foucaultlasersensor zum Einsatz gelangt.

9. Koordinatenmessgerät nach zumindest einem der Ansprüche 1-7,
**dadurch gekennzeichnet,**
**dass** als Abstandssensor (34) ein Mehrchip-Autofocus zum Einsatz gelangt.

10. Koordinatenmessgerät nach zumindest einem der vorherigen Ansprüche,
**dadurch gekennzeichnet,**
**dass** Messwerte des Abstandssensors (34) und Messwerte des Bildverarbeitungssensors (32) in Echtzeit zur Regelung von Scanvorgängen mit einer die Zielmarke und das Antastformelement umfassenden Taststiftkonfiguration bzw. einem Taster (28) und dem Koordinatenmessgerät (10) heranziehbar sind.

11. Koordinatenmessgerät nach zumindest einem der vorherigen Ansprüche,
**dadurch gekennzeichnet,**
**dass** ein Überschreiten von definierten Sollauslenkungen der Sensoren (32, 34) als Triggersignal zum Bestimmen der Antastformelementposition verwendbar ist.

12. Koordinatenmessgerät nach zumindest einem der vorherigen Ansprüche,
**dadurch gekennzeichnet,**
**dass** eine Auslenkung der Koordinatenrichtung von beiden Sensoren (32, 34) mit den Koordinatenwerten des Koordinatenmessgerätes (10) zu einem Messwert zusammenfassbar oder überlagerbar sind.

13. Koordinatenmessgerät nach zumindest einem der vorherigen Ansprüche,
**dadurch gekennzeichnet,**
**dass** zwischen der Zielmarke (40) und dem Antastformelement (46) ein ein-, zwei- oder dreidimensionales Lager (44) angeordnet ist.

14. Koordinatenmessgerät nach zumindest einem der vorherigen Ansprüche,
**dadurch gekennzeichnet,**
**dass** die Zielmarke (40) und das Antastformelement (46) durch einen starren Taststift (42) miteinander verbunden sind.

15. Koordinatenmessgerät nach zumindest einem der Ansprüche 1-13,
**dadurch gekennzeichnet,**
**dass** das Antastformelement (46) und die Zielmarke (40) durch einen elastischen Taststift miteinander verbunden sind.

16. Koordinatenmessgerät nach zumindest einem der vorherigen Ansprüche,
**dadurch gekennzeichnet,**
**dass** die Lagerstelle für den Taststift (42) eine elastische Membran (40) ist.

17. Koordinatenmessgerät nach zumindest einem der vorherigen Ansprüche,
**dadurch gekennzeichnet,**
**dass** der Taststift (42) mit Zielmarke (40) und Antastformelement (46) in ein, zwei oder drei Achsen gelagert ist.

18. Koordinatenmessgerät nach zumindest einem der vorherigen Ansprüche,
**dadurch gekennzeichnet,**
**dass** das Antastformelement (46), der Taststift (42) und die Zielmarke (40) ein Tastsystem bilden, das gekapselt aufgebaut ist und durch ein optisches Eintrittsfenster die Zielmarke erfassbar ist.

19. Koordinatenmessgerät nach Anspruch 19,
**dadurch gekennzeichnet,**
**dass** das optische Eintrittsfenster als abbildendes System ausgebildet ist.

20. Koordinatenmessgerät nach zumindest einem der vorherigen Ansprüche,
**dadurch gekennzeichnet,**
**dass** die Zielmarke durch Dunkelfeldauflicht oder Hellfeldauflicht oder winkelverstellbares Auflicht beleuchtbar ist.

21. Koordinatenmessgerät nach zumindest einem der vorherigen Ansprüche,
**dadurch gekennzeichnet,**
**dass** die Zielmarke (40) durch einen Laserstrahl des Abstandssensors (34) beleuchtbar ist.

22. Koordinatenmessgerät nach zumindest einem der vorherigen Ansprüche,
**dadurch gekennzeichnet,**
**dass** die Zielmarke (40) aus abgestuften Grauwerten derart besteht, dass eine laterale Auslenkung der Zielmarke zu einer Intensitätsveränderung eines Laserreflexsignals führt.

23. Koordinatenmessgerät nach zumindest einem der vorherigen Ansprüche,
**dadurch gekennzeichnet,**
**dass** eine laterale Auslenkung der Zielmarke aus einer Intensitätsveränderung des Lasersignals detektierbar ist.

24. Koordinatenmessgerät nach zumindest einem der vorherigen Ansprüche,
**dadurch gekennzeichnet,**
**dass** ein Tastsystem bestehend aus Zielmarke (40) und Lagerung (44) und/oder Antastformelement (46) und/oder Kapselung über ein Tasterwechselsystem vor die optische Sensorik (32, 34) einwechselbar ist und/oder in einem Tastermagazin ablegbar ist.

25. Koordinatenmessgerät nach zumindest einem der vorherigen Ansprüche,
**dadurch gekennzeichnet,**
**dass** eine Kennlinie für das Verhalten von der Auslenkung des Antastformelementes (46) zur Auslenkung der optischen Sensoren (32, 34) vor Betrieb des Koordinatenmessgerätes (10) eingemessen und anschließend in Echtzeit automatisch korrigierbar ist.

26. Koordinatenmessgerät nach zumindest einem der vorherigen Ansprüche,
**dadurch gekennzeichnet,**
**dass** der Abstandssensor (34) ein Laserabstandssensor, Weißlichtinterferometer, Autofokussensor, Kohärenzradar oder ein Sensor ist, der sich achromatische Abbildungsfehler zu eigen macht.

27. Verfahren zur Bestimmung der räumlichen Lage eines ein Objekt (15) bzw. dessen Oberfläche taktil messenden Antastformelements (46) unter Verwendung einer einen Abstandssensor (34) und einen Bildverarbeitungssensor (32) mit gemeinsamen optischen Strahlengang aufweisenden optischen Sensorik (32, 34) eines Koordinatenmessgerätes (10),
**dadurch gekennzeichnet,**
**dass** die Lage des Anstastformelementes (46) oder einer diesem zugeordneten Zielmarke (40) mittels des Abstandssensors und mittels des Bilverarbeitungssensors gemessen wird, dass die Messergebnisse des Abstandssensors und des Bildverarbeitungssensors einem Auswerterechner zugeführt werden, der aus den Messergebnissen der Lage des Antastformelementes bzw. der Zielmarke die räumliche Lage des Antastformelementes berechnet, und dass mit dem Abstandssensor oder dem Bildverarbeitungssensor auch unmittelbar die Oberfläche des Objektes gemessen wird.

## Claims

1. Coordinate measuring device (10) for measurement of an object (15) or its surface comprising a tactile-operating moulded tracer element (46) interacting with the object and a sensor system (30) detecting the position of the moulded tracer element or of a target mark directly assigned thereto, said system comprising a distance sensor (34) and an image processing sensor (32), the distance sensor and the image processing sensor having a common optical beam path,
**wherein**
the distance sensor (34) and the image processing sensor (32) are set up for simultaneous measurement of the position of the moulded tracer element (46) or of the target mark (40), the coordinate measuring device comprises an evaluation computer, and the evaluation computer is set up to calculate from the measured values of the distance sensor and of the image processing sensor the spatial position of the moulded tracer element, the distance sensor and/or the image processing sensor being set up to directly measure the surface of the object too.

2. Coordinate measuring device according to Claim 1,
**wherein**
the target mark (40) is designed such that it is suitable for measurement of its deflection parallel to the beam path by means of the distance sensor (34) and has structures allowing measurement of the position in a plane perpendicular to the beam path by means of image processing.

3. Coordinate measuring device according to at least one of the preceding claims,
**wherein**
the target mark (40) and/or a marking (48) thereof is so distinctive that in the case of a purely lateral deflection of a tracer pin configuration comprising the target mark and the moulded tracer element (46) the measured value for the distance sensor (34) remains constant.

4. Coordinate measuring device according to at least one of the preceding claims,
**wherein**
the target mark (40) and/or a marking (48) thereof is arranged on a spherical surface whose radius is equal to the distance between target mark or its marking and the support of a tracer pin configuration comprising the target mark and the moulded tracer element (34).

5. Coordinate measuring device according to at least one of the preceding claims,
**wherein**
the target mark (40) and/or its marking (48) has a non-spherical geometry, said geometry being convertible into a spherical one by prior measurement.

6. Coordinate measuring device according to at least one of the preceding claims,
**wherein**
for measurement with image processing in the lateral direction a target mark (40) or marking (48) thereof is arranged on a spherical surface and does not have any extent in the radial direction.

7. Coordinate measuring device according to at least one of the preceding claims,
**wherein**
the target mark and/or its marking (48) applied for the image processing sensor (32) has preferential directions such as a cross or an ellipsis for evaluation of a rotation of the tracer pin configuration.

8. Coordinate measuring device according to at least one of the preceding claims,
**wherein**
a Foucault laser sensor integrated into the beam path is used as the distance sensor (34).

9. Coordinate measuring device according to one of Claims 1 to 7,
**wherein**
a multi-chip autofocus is used as the distance sensor (34).

10. Coordinate measuring device according to at least one of the preceding claims,
**wherein**
measured values of the distance sensor (34) and measured values of the image processing sensor (32) can be applied in real time for the regulation of scanning processes with a tracer pin configuration comprising the target mark and the moulded tracer element or a tracer (28) and the coordinate measuring device (10).

11. Coordinate measuring device according to at least one of the preceding claims,
**wherein**
overshooting of defined set-point deflections of the sensors (32, 34) can be used as a trigger signal for determination of the moulded tracer element position.

12. Coordinate measuring device according to at least one of the preceding claims,
**wherein**
a deflection of the coordinate direction of both sensors (32, 34) can be combined with or superimposed on the coordinate values of the coordinate measuring device (10) to obtain one measured value.

13. Coordinate measuring device according to at least one of the preceding claims,
**wherein**
a one, two or three-dimensional support (44) is arranged between the target mark (40) and the moulded tracer element (46).

14. Coordinate measuring device according to at least one of the preceding claims,
**wherein**
the target mark (40) and the moulded tracer element (46) are connected to one another by a rigid tracer pin (42).

15. Coordinate measuring device according to at least one of Claims 1 to 13,
**wherein**
the moulded tracer element (46) and the target mark (40) are connected to one another by an elastic tracer pin.

16. Coordinate measuring device according to at least one of the preceding claims,
**wherein**
the supporting point for the tracer pin (42) is an elastic diaphragm (40).

17. Coordinate measuring device according to at least one of the preceding claims,
**wherein**
the tracer pin (42) with the target mark (40) and the moulded tracer element (46) is supported in one, two or three axes.

18. Coordinate measuring device according to at least one of the preceding claims,
**wherein**
the moulded tracer element (46), the tracer pin (42) and the target mark (40) form a sensing system that is constructed to be encapsulated and the target mark can be detected by an optical entry window.

19. Coordinate measuring device according to Claim 19,
**wherein**
the optical entry window is designed as an imaging system.

20. Coordinate measuring device according to at least one of the preceding claims,
**wherein**
the target mark can be illuminated by dark field incident light or bright field incident light or angularly adjustable incident light.

21. Coordinate measuring device according to at least one of the preceding claims,
**wherein**
the target mark (40) can be illuminated by a laser beam of the distance sensor (34).

22. Coordinate measuring device according to at least one of the preceding claims,
**wherein**
the target mark (40) comprises graduated grey values and a lateral deflection of the target mark leads to a change in the intensity of a laser reflex signal.

23. Coordinate measuring device according to at least one of the preceding claims,
**wherein**
a lateral deflection of the target mark can be detected from a change in the intensity of the laser signal.

24. Coordinate measuring device according to at least one of the preceding claims,
**wherein**
a tracing system comprising target mark (40) and support (44) and/or moulded tracer element (46) and/or encapsulation can be changed before the optical sensor system (32, 34) using a tracer change system and/or placed in a tracer magazine.

25. Coordinate measuring device according to at least one of the preceding claims,
**wherein**
a characteristic for the behaviour from the deflection of the moulded tracer element (46) to the deflection of the optical sensors (32, 34) is measured before operation of the coordinate measuring device (10) and can then be automatically corrected in real time.

26. Coordinate measuring device according to at least one of the preceding claims,
**wherein**
the distance sensor (34) is a laser distance sensor, a white light interferometer, an autofocus sensor, a coherence radar or a sensor for achromatic imaging errors.

27. Method for determining the spatial position of a moulded tracer element (46) for tactile measuring of an object (15) or its surface and using an optical sensor system (32, 34) of a coordinate measuring device (10), said system having a distance sensor (34) and an image processing sensor (32) with a common optical beam path,
**wherein**
the position of the moulded tracer element (46) or of a target mark (40) assigned thereto is measured by the distance sensor (34) and by the image processing sensor (32) with a common optical beam path, wherein the measurement results of the distance sensor and of the image processing sensor are supplied to an evaluation computer that calculates from the measurement results for the position of the moulded tracer element or of the target mark the spatial position of the moulded tracer element, and wherein the surface of the object is also measured directly by the distance sensor or by the image processing sensor.

## Revendications

1. Appareil de mesure de coordonnées (10) pour mesurer un objet (15) ou sa surface, comprenant un élément palpeur de forme (46) à détection tactile interagissant avec l'objet, ainsi qu'un système de détection optique (30) reconnaissant la position de l'élément palpeur de forme ou d'un repère de visée (40) directement associé à celui-ci, et comprenant un détecteur de distance (34) et un capteur de traitement d'images (32), sachant que le détecteur de distance et le capteur de traitement d'images présentent un trajet optique des rayons commun,
**caractérisé en ce**
**que** le détecteur de distance (34) et le capteur de traitement d'images (32) sont ajustés pour mesurer simultanément la position de l'élément palpeur de forme (46) ou du repère de visée (40), que l'appareil de mesure de coordonnées comprend un calculateur d'analyse et que le calculateur d'analyse est configuré pour calculer la position dans l'espace de l'élément palpeur de forme à partir des valeurs mesurées par le détecteur de distance et le capteur de traitement d'images, sachant que le détecteur de distance et/ou le capteur de traitement d'images est/sont ajusté(s) de manière à également mesurer directement la surface de l'objet.

2. Appareil de mesure de coordonnées selon la revendication 1,
**caractérisé en ce**
**que** le repère de visée (40) est conçu de telle manière qu'il convient pour mesurer sa déviation parallèlement au trajet des rayons au moyen du détecteur de distance (34), et présente des structures qui permettent une mesure de la position dans un plan perpendiculaire au trajet des rayons au moyen du traitement d'images.

3. Appareil de mesure de coordonnées selon au moins l'une des revendications précédentes,
**caractérisé en ce**
**que** le repère de visée (40) ou une marque (48) de celui-ci est formé(e) de telle manière qu'en présence d'une déviation purement latérale d'une configuration de palpeurs comprenant le repère de visée et l'élément palpeur de forme (46), la valeur mesurée pour le détecteur de distance (34) reste constante.

4. Appareil de mesure de coordonnées selon au moins l'une des revendications précédentes,
**caractérisé en ce**
**que** le repère de visée (40) ou une marque (48) de celui-ci est disposé(e) sur une surface sphérique dont le rayon est égal à la distance entre le repère de visée ou sa marque et le logement d'une configuration de palpeurs comprenant le repère de visée et l'élément palpeur de forme (46).

5. Appareil de mesure de coordonnées selon au moins l'une des revendications précédentes,
**caractérisé en ce**
**que** le repère de visée (40) ou sa marque (48) présente une géométrie non sphérique, sachant que par une saisie métrologique préalable, la géométrie peut être convertie en une géométrie sphérique.

6. Appareil de mesure de coordonnées selon au moins l'une des revendications précédentes,
**caractérisé en ce**
**que** pour la mesure avec traitement d'images dans le sens latéral, un repère de visée (40) ou un marque (48) de celui-ci est disposé(e) sur une surface sphérique et ne présente pas d'extension dans le sens radial.

7. Appareil de mesure de coordonnées selon au moins l'une des revendications précédentes,
**caractérisé en ce**
**que** le repère de visée (40) ou sa marque (48) tracé(e) pour le capteur de traitement d'images (32) présente des directions prédominantes telles qu'une croix ou une ellipse pour analyser une torsion de la configuration de palpeurs.

8. Appareil de mesure de coordonnées selon au moins l'une des revendications précédentes,
**caractérisé en ce**
**qu'**un capteur laser à courant de Foucault intégré dans le trajet des rayons est utilisé comme détecteur de distance (34).

9. Appareil de mesure de coordonnées selon au moins l'une des revendications 1 à 7,
**caractérisé en ce**
**qu'**un système autofocus à puces multiples est utilisé comme détecteur de distance (34).

10. Appareil de mesure de coordonnées selon au moins l'une des revendications précédentes,
**caractérisé en ce**
**que** des valeurs mesurées par le détecteur de distances (34) et des valeurs mesurées par le capteur de traitement d'images (32) peuvent être exploitées en temps réel pour réguler des cycles de balayage avec une configuration de palpeurs comprenant le repère de visée et l'élément palpeur de forme ou avec un palpeur (28) et l'appareil de mesure de coordonnées (10).

11. Appareil de mesure de coordonnées selon au moins l'une des revendications précédentes,
**caractérisé en ce**
**qu'**un dépassement de déviations théoriques définies des capteurs (32, 34) peut être utilisé comme signal déclencheur pour déterminer la position de l'élément palpeur de forme.

12. Appareil de mesure de coordonnées selon au moins l'une des revendications précédentes,
**caractérisé en ce**
**qu'**une déviation de l'axe des coordonnées des deux capteurs (32, 34) peut être combinée ou superposée aux coordonnées de l'appareil de mesure de coordonnées (10) pour former une valeur de mesure.

13. Appareil de mesure de coordonnées selon au moins l'une des revendications précédentes,
**caractérisé en ce**
**qu'**un palier à une, deux ou trois dimensions (44) est disposé entre le repère de visée (40) et l'élément palpeur de forme (46).

14. Appareil de mesure de coordonnées selon au moins l'une des revendications précédentes,
**caractérisé en ce**
**que** le repère de visée (40) et l'élément palpeur de forme (46) sont reliés entre eux par un palpeur rigide (42).

15. Appareil de mesure de coordonnées selon au moins l'une des revendications 1 à 13,
**caractérisé en ce**
**que** l'élément palpeur de forme (46) et le repère de visée (40) sont reliés entre eux par un palpeur élastique.

16. Appareil de mesure de coordonnées selon au moins l'une des revendications précédentes,
**caractérisé en ce**
**que** le palier pour le palpeur (42) est une membrane élastique (40).

17. Appareil de mesure de coordonnées selon au moins l'une des revendications précédentes,
**caractérisé en ce**
**que** le palpeur (42) avec repère de visée (40) et élément palpeur de forme (46) est logé selon un, deux ou trois axe(s).

18. Appareil de mesure de coordonnées selon au moins l'une des revendications précédentes, **caractérisé en ce**
**que** l'élément palpeur de forme (46), le palpeur (42) et le repère de visée (40) forment un système palpeur capsulé et que le repère de visée peut être détecté à travers une fenêtre d'entrée optique.

19. Appareil de mesure de coordonnées selon la revendication 18,
**caractérisé en ce**
**que** la fenêtre d'entrée optique est formée comme système reproduisant.

20. Appareil de mesure de coordonnées selon au moins l'une des revendications précédentes,
**caractérisé en ce**
**que** le repère de visée peut être éclairé par éclairage à fond noir ou par éclairage à fond clair ou par éclairage dont l'angle d'incidence est réglable.

21. Appareil de mesure de coordonnées selon au moins l'une des revendications précédentes, **caractérisé en ce**
**que** le repère de visée (40) peut être éclairé par un rayon laser du détecteur de distance (34).

22. Appareil de mesure de coordonnées selon au moins l'une des revendications précédentes,
**caractérisé en ce**
**que** le repère de visée (40) est constitué de valeurs de gris étagées de telle manière qu'une déviation latérale du repère de visée provoque une modification de l'intensité du signal laser réfléchi.

23. Appareil de mesure de coordonnées selon au moins l'une des revendications précédentes,
**caractérisé en ce**
**qu'**une déviation latérale du repère de visée peut être détectée par une modification de l'intensité du signal laser.

24. Appareil de mesure de coordonnées selon au moins l'une des revendications précédentes,
**caractérisé en ce**
**qu'**un système palpeur, constitué d'un repère de visée (40) et d'un palier (44) et/ou d'un élément palpeur de forme (46) et/ou d'un blindage, est échangeable au moyen d'un système palpeur interchangeable et/ou peut être rangé dans un magasin de palpeurs en amont du système de détection optique (32, 34).

25. Appareil de mesure de coordonnées selon au moins l'une des revendications précédentes,
**caractérisé en ce**
**qu'**avant la mise en service de l'appareil de mesure de coordonnées (10), une courbe caractéristique pour le comportement de la déviation de l'élément palpeur de forme (46) par rapport à la déviation des capteurs optiques (32, 34) est relevée et peut être ensuite automatiquement corrigée en temps réel.

26. Appareil de mesure de coordonnées selon au moins l'une des revendications précédentes,
**caractérisé en ce**
**que** le détecteur de distance (34) est un détecteur de distance à laser, un interféromètre à lumière blanche, un capteur autofocus, un radar cohérent ou un capteur qui assimile des erreurs de reproduction achromatiques.

27. Procédé pour déterminer la position dans l'espace d'un objet (15) ou de sa surface avec un élément palpeur de forme (46) à mesure tactile en utilisant un système de détection optique (32, 34) d'un appareil de mesure de coordonnées (10) et présentant un détecteur de distance (34) et un capteur de traitement d'images (32) avec trajet optique des rayons commun,
**caractérisé en ce**
**que** la position de l'élément palpeur de forme (46) ou d'un repère de visée (40) directement associé à celui-ci est mesurée au moyen du détecteur de distance et au moyen du capteur de traitement d'images, que les résultats des mesures du détecteur de distance et du capteur de traitement d'images sont envoyés à un calculateur d'analyse qui, à partir des résultats des mesures de la position de l'élément palpeur de forme ou du repère de visée, calcule la position dans l'espace de l'élément palpeur de forme, et que la surface de l'objet est aussi directement mesurée avec le détecteur de distance ou le capteur de traitement d'images.
